**Europäisches Patentamt**

**European Patent Office**

**Office européen des brevets**

(19)

(11) Veröffentlichungsnummer : **0 280 676 B1**

(12) # EUROPÄISCHE PATENTSCHRIFT

(45) Veröffentlichungstag der Patentschrift :
**20.05.92 Patentblatt 92/21**

(51) Int. Cl.$^5$ : **B01D 1/26,** C12F 1/00

(21) Anmeldenummer : **88890035.4**

(22) Anmeldetag : **23.02.88**

(54) **Verfahren zur destillativen Trennung von Gemischen.**

(30) Priorität : **25.02.87 AT 411/87**

(43) Veröffentlichungstag der Anmeldung :
**31.08.88 Patentblatt 88/35**

(45) Bekanntmachung des Hinweises auf die
Patenterteilung :
**20.05.92 Patentblatt 92/21**

(84) Benannte Vertragsstaaten :
**BE CH DE FR GB IT LI NL SE**

(56) Entgegenhaltungen :
**DE-A- 2 632 910
DE-B- 1 142 162
FR-A- 2 583 651
GB-A- 1 474 177
US-A- 4 265 701**

(73) Patentinhaber : **VOGELBUSCH
GESELLSCHAFT m.b.H.
Blechturmgasse 11
A-1050 Wien (AT)**

(72) Erfinder : **Krenn, Wolfgang, Dipl.-Ing.
Jeneweingasse 32/3
A-1210 Wien (AT)**

(74) Vertreter : **Itze, Peter, Dipl.-Ing.
Amerlingstrasse 8
A-1060 Wien (AT)**

**EP 0 280 676 B1**

Jouve, 18, rue Saint-Denis, 75001 PARIS

## Beschreibung

Die Erfindung bezieht sich auf ein Verfahren zur destillativen Trennung von Gemischen von, gegebenenfalls gelöste und/oder suspendierte Stoffe enthaltenden Flüssigkeiten unterschiedlicher Siedepunkte durch mehrstufige Eindampfung, wobei die Brüden der Eindampfungsstufen zur Beheizung folgender Stufen eingesetzt werden, sowie auf eine Vorrichtung zur Durchführung des Verfahrens.

Bei den bekannten Verfahren und Vorrichtungen der genannten Art werden die Brüden der einzelnen Stufen der jeweils nächsten Stufe als Heizmedium zugeführt. Dies hat den Nachteil, daß sich zufolge der Anreicherung des Alkohols in den Restbrüden auf Grund der fortschreitenden Kondensation, die Kondensationstemperatur der Restbrüden erniedrigt. Dies führt dann zu einer räumlichen Temperaturinhomogenität, was Probleme bei der Verfahrensdurchführung mit sich bringt. Es wurde daher bereits eine Ausführung bekannt, bei welcher die Produktbrüden des zuerst vom Produktstrom durchströmten Verdampfers an der Rückführung im System nicht teilnehmen. Ein solches System vermeidet zwar die vorstehend geschilderten Nachteile, ist jedoch in energetischer Hinsicht nicht zielführend, da dadurch erhebliche Energiemengen in einem Kondensator abgeführt werden müssen, welche vorher in anderer Form, z.B. als Heizdampf, zugeführt werden mußte.

Der Erfindung liegt die Aufgabe zugrunde, ein Verfahren der eingangs genannten Art so zu modifizieren, daß räumliche Temperaturinhomogenitäten und auch Energieverluste vermieden werden.

Erfindungsgemäß wird diese Aufgabe dadurch gelöst, daß frisches vorgewärmtes Gemisch in die, hinsichtlich der Strömungsrichtung des Heizdampfes zweite Stufe eingeleitet wird, wobei die Brüden dieser Stufe mit dem Entlüftungsdampf derselben vereinigt und zur Heizung der darauffolgenden Stufe verwendet werden, und daß die aus der zweiten Stufe abgezogene, an niedriger siedendem Anteil ärmere flüssige Phase der in Strömungsrichtung des Heizdampfes ersten Stufe zugeführt wird, deren Brüden unter Verdichtung mit frischem Heizdampf vereinigt und zur Beheizung der beiden ersten Eindampfungsstufen eingesetzt werden. Dadurch werden die Brüden der produktseitig ersten Stufe mit dem noch heißen Entlüftungsdampf dieser Stufe verdünnt, so daß die Temperaturinhomogenitäten vermieden werden. Vor allem wird damit zusätzlich die in den Brüden der produktseitig ersten Verdampfungsstufe enthaltene Energie im Verdampferkreislauf direkt ausgenützt, was in energetischer Hinsicht eine erhebliche Einsparung an einzusetzendem Heizdampf ergibt. Die in Strömungsrichtung des Heizdampfes erste Stufe wird dabei homogen durch frischen Heizdampf zusammen mit den an niedriger siedendem Anteil ärmeren Brüden dieser Stufe erhitzt, wodurch das erforderliche Temperaturniveau erreicht wird, ohne daß in der heizdampfseitig folgenden Stufe eine starke Kondensation stattfindet, welche eine zu starke Temperaturabsendung des Heizdampfes bewirken würde.

Vorteilhafterweise können die beiden ersten Stufen gemeinsam beheizt werden, wodurch der Entlüftungsdampf der dampfseitig zweiten Stufe weniger abgekühlt wird, als bei zwei getrennten Stufen.

Bei einer erfindungsgemäßen Vorrichtung zur Durchführung des erfindungsgemäßen Verfahrens, bei welcher eine Reihe von Verdampfern hintereinandergeschaltet sind, wobei die Brüden der in Strömungsrichtung des Heizdampfes gesehen früheren Verdampfer zur Beheizung der nachfolgenden Verdampfer eingesetzt sind, weisen die beiden ersten Verdampferstufen einen gemeinsamen Heizdampfraum und getrennte Produkträume auf. Dadurch wird eine sowohl in räumlicher als auch in energetischer Hinsicht sehr vorteilhafte Ausbildung erreicht.

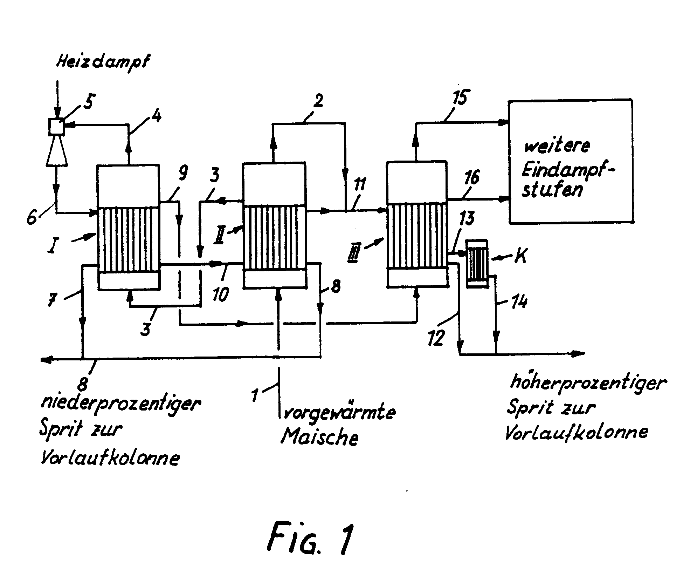

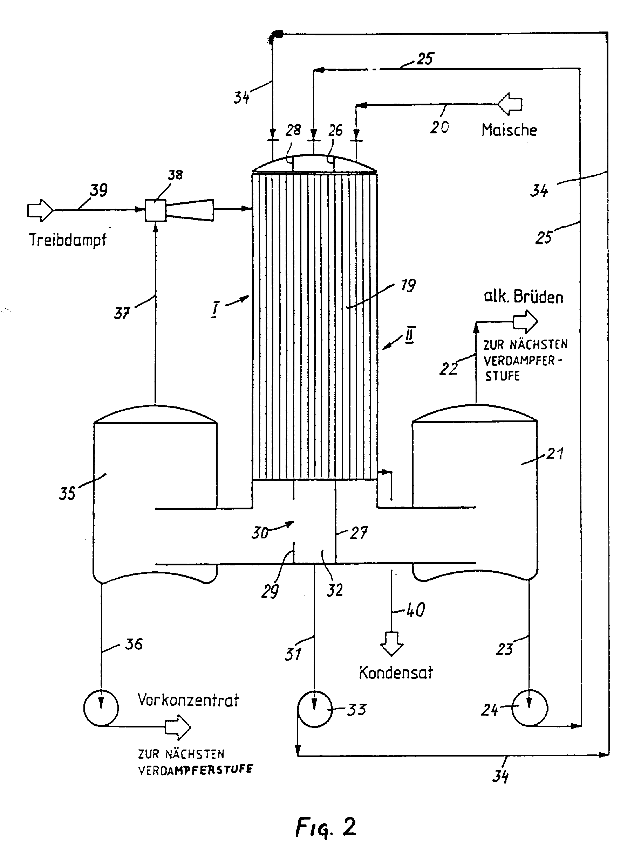

Das erfindungsgemäße Verfahren wird nachstehend anhand der, zwei Ausführungsvarianten wiedergebenden Zeichnung erläutert, u.zw. für eine Destillationseindampfung alkoholhältiger Maischen. Fig. 1 zeigt schematisch eine gesamte Anlage, wobei zwei getrennte Verdampfer für die beiden ersten Verdampferstufen vorgesehen sind. Fig. 2 zeigt einen Schnitt durch einen erfindungsgemäßen Verdampfer zur Durchführung des Verfahrens, in welchem die beiden ersten Stufen heizdampfseitig vereinigt sind.

Die drei ersten Verdampfungsstufen einer mehrstufigen Verdampfungsanlage sind in der Reihenfolge des Durchgangs des Heizmediums mit I, II, III bezeichnet. In die Stufe II wird über die Leitung 1 vorgewärmte Maische eingeführt. Von der Stufe II werden die alkoholreichen Brüden über die Leitung 2 abgeführt und der Verdampfungsstufe III zugeleitet. Die relativ alkoholarme Maische wird über die Leitung 3 der Stufe I zugeführt. Die Brüden der Stufe I werden über die Leitung 4 einem Brüdenverdichter 5 zugeführt, in welchem die Brüden mit frischem Heizdampf vermischt und über die Leitung 6 in den Heizdampfraum der Verdampfungsstufe I eingeleitet. Das in dieser Verdampfungsstufe I anfallende Kondensat, welches ein relativ niederprozentiger Sprit ist, wird über die Leitung 7 aus der Stufe abgeführt und über eine Leitung 8 einer Vorlaufkolonne zugeleitet. Die aus der Stufe I austretende, nunmehr alkoholfreie Maische wird über die Leitung 9 dem Verdampfer III zugeführt. Der aus der Stufe I austretende Heizdampf wird über die Leitung 10 dem Verdampfer II zugeleitet. Das im Verdampfer II anfallende Kondensat, welches relativ alkoholarm ist wird gleichfalls einer Vorlaufkolonne zugeführt. Der aus der Stufe II austretende Entlüftungsdampf wird über die Leitung 11 aus dem Verdampfer II abgeführt, mit dem über die Leitung 2 abgeführten alkoholreichen Brüden vereinigt und zur Beheizung des Verdampfers 3 in diesen eingeführt, in welchem, wie schon angegeben, die alkoholfreie, über die Leitung 9 vom Verdampfer 1 abgezogene Maische weiter eingedampft wird. In dem Verdampfer 3 fällt als Kondensat ein höherprozentiger Sprit an, wobei das direkt anfallende Kondensat über die Leitung 12 zur Vorlaufkolonne geführt wird und das noch dampfförmige Produkt über die Leitung 13 einem Kondensator K zugeleitet wird, in welchem der restliche dampfförmige Anteil des höherprozentigen Sprits kondensiert und über die Leitung 14 zur Leitung 12 geleitet wird. Über die Leitung 15 werden die Brüden des Verdampfers 3 und über die Leitung 16 der Heizdampf aus dem Verdampfer 3 weiteren Eindampfstufen zugeführt.

Bei der in Fig. 1 dargestellten Anlage handelt es sich um eine kombinierte Anlage, die zu Beginn mit Überdruck und dann ab der dritten Stufe im Vakuum arbeitet. Es wird dabei der Heizdampf dem Brüdenverdichter mit etwa 26 bar zugeführt, welchem die Brüden, die aus der Stufe I, in deren Brüdenkörper etwa 1,3bar herrschen zugeleitet werden. Aus der zweiten Stufe treten die Brüden bei etwa 1 bar aus, und in Stufe III werden die Brüden bereits im Vakuum bei etwa 0,4 bar abgezogen. Die dabei auftretenden Temperaturen sind den jeweiligen Druckverhältnissen und der Konzentration an Alkohol angepaßt. So beträgt die Temperatur des Heizmediums der Stufe I an ihrem Eintritt etwa 105° und tritt mit etwa 104° aus der ersten Stufe aus, mit welcher Temperatur das Heizmedium dann in die zweite Stufe eintritt. Der aus der Stufe II austretende Entlüftungsdampf, der mit den alkoholhältigen Brüden aus der zweiten Stufe vermischt wird, tritt mit etwa 103° aus und tritt auf Grund der Mischung mit den Brüden, welche wie schon angeführt sehr alkoholreich sind mit etwa 98° in die Stufe III ein. Die von der Stufe III austretenden Brüden haben eine Temperatur von etwa 73°. Entsprechend dem Temperaturverlauf des Heizmediums ist auch der Temperaturverlauf des einzudampfenden Produktes. Die vorgewärmte Maische tritt mit etwa 96°C in die Stufe II ein, wird in dieser unter Verdampfung des Alkohols auf 98°C erhitzt, mit welcher Temperatur die alkoholarm Maische in die Stufe I eintritt. Die von der Stufe I kommende alkoholfreie Maische tritt dann mit 96°C in die Stufe III ein, in welcher sie durch das herrschende Vakuun weiter eingedampft wird.

Der in Fig. 2 wiedergegebene Verdampfer ist hinsichtlich des Energieverbrauchs sehr wirtschaftlich, da in diesem die in Fig. 1 getrennt wiedergegebenen Verdampfer I und II zu einem einzigen Verdampfer zusammengefaßt sind. Es ist dabei der rechte Teil des Verdampfers die Verdampferstufe II und der linke Teil des Verdampfers die Verdampferstufe I. Die beiden Verdampfer sind heizdampfseitig vereinigt, produktseitig jedoch getrennt. Mit 19 ist der Heizteil der beiden Verdampferstufen bezeichnet. Es handelt sich dabei um bekannt Gleichstromröhrenverdampfer, bei welchen an der einen Seite der Rohrwandungen das Produkt und an der anderen Seite der Rohrwandungen das Heizmedium in gleicher Richtung strömt. Der Verdampferstufe II wird die vorgewärmte Maische über die Leitung 20 zugeführt von wo die Maische mit ihren Brüden in einen Brüdenkörper 21 gelangt, in welchem die Brüden von dem flüssigen Anteil getrennt werden. Die alkoholhältigen Brüden werden über die Leitung 22 der Stufe III, die analog der Stufe III gemäß der in Fig. 1 dargestellten Anlage ausgebildet ist, zugeleitet. Die alkoholarme Maische wird über die Leitung 23 einer Pumpe 24 zugeleitet, welche diese Maische über die Leitung 25 am Kopf der ersten Verdampferstufe aufgibt. Die produktseitige Trennung der Verdampferstufen erfolgt über die Trennwände 26 und 27. Wie ersichtlich, ist die Stufe I um entsprechende Wärmetauschflächen zu erhalten, flüssigkeitsseitig abgeteilt, dampfseitig jedoch vereinigt. Dazu ist am Kopf der Verdampferstufe I eine Trennwand 28 vorgesehen, und am Fuß des Verdampfers eine Trennwand 29, welche eine Öffnung 30 für den Dampfdurchtritt aufweist. Die über die Leitung 25 in die Stufe I eingebrachte Maische tritt über die Leitung 31 aus dem Abteil 32 des Verdampfers I aus und wird über eine Pumpe 33 und über eine Leitung 34 dem zweiten Abteil der Verdampferstufe I zugeführt, von wo die Maische zusammen mit den Brüden, die aus dem ersten Abteil der Verdampferstufe I über die Öffnung 30 und aus dem zweiten Abteil der Verdampferstufe I direkt in den weiteren Brüdenkörper 35 gelangt. In diesem Brüdenkörper tritt wieder die Trennung in flüssigen Anteil und dampfförmigen Anteil ein, wobei der flüssige Anteil über die Leitung 36 dem Verdampfer III zugeführt wird, wogegen die Brüden über die Leitung 37 dem Brüdenverdichter 38 zugeleitet werden, welcher über eine Leitung 39 mit Treibdampf beaufschlagt ist. Das in der gemeinsamen Stufe I und II anfallende Kondensat wird über die Leitung 40 abgeführt.

In energetischer Hinsicht ist die gemeinsame Verdampferstufe I und II insofern günstiger als die in Fig. 1 wiedergegebenen getrennte Ausführung, da keine Wärmeverluste bei der Überleitung des Heizmediums über die Leitung 10 erfolgen kann.

## Patentansprüche

1. Verfahren zur destillativen Trennung von Gemischen von gegebenenfalls gelöste und/oder suspendierte Stoffe enthaltenden Flüssigkeiten unterschiedlicher Siedepunkte durch mehrstufige Eindampfung, wobei die Brüden der Eindampfungsstufen zur Beheizung folgender Stufen eingesetzt werden, dadurch gekennzeichnet, daß frisches, vorgewärmtes Gemisch in die, hinsichtlich der Strömungsrichtung des Heizdampfes zweite Stufe eingeleitet wird, wobei die Brüden dieser Stufe mit dem Entlüftungsdampf derselben vereinigt und zur Heizung der darauffolgenden Stufe verwendet werden, und daß die aus der zweiten Stufe abgezogene an niedriger siedendem Anteil ärmere flüssige Phase der in Strömungsrichtung des Heizdampfes ersten Stufe zugeführt wird, deren Brüden unter Verdichtung mit frischem Heizdampf vereinigt und zur Beheizung der beiden ersten Eindampfungsstufen eingestzt werden.

2. Verfahren nach Anspruch 1, <u>dadurch gekennzeichnet</u>, daß die beiden ersten Stufen gemeinsam beheizt werden.

3. Vorrichtung zur Durchführung des Verfahrens nach Anspruch 2, bei welcher eine Reihe von Verdampfern hintereinandergeschaltet sind, wobei die Brüden der in Strömungsrichtung des Heizdampfes gesehen früheren Verdampfer zur Beheizung der nachfolgenden Verdampfer eingesetzt sind, <u>dadurch gekennzeichnet</u>, daß die beiden ersten Verdampferstufen (I,II) einen gemeinsamen Heizdampfraum (19) und getrennte Produkträume aufweisen.

## Claims

1. A method for distillatory separation of mixtures of liquids with different boiling points, which may contain dissolved and/or suspended substances, by multi-stage evaporation, the exhaust vapors of the evaporation stages being used for heating the subsequent stages, characterized in that fresh, pre-heated mixture is fed to the with respect to the flow direction of the heating steam second stage, the exhaust vapors of this stage being merged with ventilation vapor of this stage and used for heating the following stage, and that the liquid phase drawn off from the second stage and containing less low-boiling parts is fed to the with respect to the flow direction of the heating steam first stage whose exhaust vapors are merged with fresh heating steam by compression and used for heating the first two evaporation stages.

2. A method as claimed in claim 1 characterized in that the first two stages are heated jointly.

3. A device for the execution of the method as claimed in claim 2, in which a number of evaporators is connected in series, the exhaust vapors of the with respect to the flow direction of the heating steam first evaporators being used for heating the following evaporations, characterized in that the first two evaporator stages (I, II) have a joint heating steam chamber (19) and separate product chambers.

## Revendications

1. Procédé de séparation par distillation de mélanges de liquides à points d'ébullition différents, contenant des substances le cas échéant dissoutes et/ou en suspension, par évaporation en plusieurs étages, les vapeurs des étages d'évaporation étant utilisées pour le chauffage des étages suivants, caractérisé en ce qu'un mélange neuf, préchauffé, est introduit dans l'étage qui est placé en deuxième position, en considérant le sens d'écoulement de la vapeur de chauffage, les vapeurs de cet étage étant réunies à sa vapeur d'aération et utilisées pour le chauffage de l'étage suivant, et en ce que la phase liquide extraite du deuxième étage, plus pauvre en composant à bas point d'ébullition, est amenée à l'étage placé en premier, dans le sens d'écoulement de la vapeur de chauffage, dont les vapeurs sont réunies, en subissant une compression, à la vapeur de chauffage neuve et utilisées pour assurer le chauffage des deux premiers étages d'évaporation.

2. Procédé selon la revendication 1, caractérisé en ce que les deux premiers étages sont chauffés en commun.

3. Dispositif pour la mise en oeuvre du procédé selon la revendication 2, dans lequel une série de vaporiseurs sont mis en circuit les uns derrière les autres, les vapeurs des vaporiseurs amont, en considérant le sens d'écoulement de la vapeur de chauffage, étant utilisées pour le chauffage des vaporiseurs aval, caractérisé en ce que les deux premiers étages vaporiseurs (I,II) présentent une enceinte de vapeur de chauffage (19) commune et des enceintes de production séparées.

Heizdampf

weitere
Eindampfstufen

niederprozentiger
Sprit zur
Vorlaufkolonne

vorgewärmte
Maische

höherprozentiger
Sprit zur
Vorlaufkolonne

FIG. 1

**Fig. 2**